# EUROPEAN PATENT APPLICATION

(11) **EP 1 422 130 A1**
(43) Date of publication of application: **26.05.2004**
(21) Application number: 03026466.7
(22) Date of filing: 20.11.2003
(51) Int. Cl.: B62D 61/08

(54) **Goods distribution vehicle**

(30) Priority: 21.11.2002 DK 200201802
(71) Applicant: U-B-Let A/S, DK-7100 Vejle (DK)
(72) Inventor: Raun, Knud, 7100 Vejle (DK)
(74) Representative: Tellefsen, Jens J.

(57) **Abstract**

A vehicle is described which is built upon a rigid base frame, and where between the rear wheels a shaft with integrated gearbox is arranged to which is coupled an electric motor connected to an electronic control via manipulation means arranged at the steering mechanism for regulating power transmission from a rechargeable energy source to the shaft, and that the seat arrangement is arranged separately from a closable integrated cargo compartment, preferably disposed behind the seat arrangement over the shaft and the electric motor.

## Description

The present invention concerns a vehicle with three or four wheels, steering mechanism and a seat arrangement, and furthermore the use of such vehicle for distributing e.g. mail, groceries, fresh bread or the like.

Three or more wheeled vehicles are known in the art.

For example, a vehicle is described in US 5503243 to Kruse. This vehicle, however, is particular in that the drive mechanism is easily detached from the frame. The overall vehicle is designed to be a very lightweight structure, which by disassembly may be lifted and stored by the user. It is not foreseen that the vehicle should transport anything besides the user. The entire construction is designed as a lightweight construction, easy to dissemble and assemble by a single user.

Another example of prior art vehicles is illustrated in US 6276480. This vehicle comprises a tiltable construction, such that part of the vehicle may tilt in relation to another part of the vehicle. Furthermore, due in part to this design, the vehicle has front wheel drive. Although a hinted storage compartment is foreseen, the vehicle will not be able to transport very useful loads, as the traction from only one front wheel limits the amount of force which can be transferred to the surface and thereby the weight which may be propelled by the vehicle as such.

Consequently, there is a need for a vehicle for industrial use.

In the following, basis will be made in distribution of letters, packets and the like, but this is quite analogous to any kind of distribution of smaller articles to addressees within a limited geographical area.

When mail is distributed in urban areas, i.e. areas where there is short distance between recipients, this often occurs by the mail being packed in large bags with which the postman bicycles to different addressees. This implies many drawbacks. Among these are to be mentioned that it is physically strenuous to cycle with heavy mailbags. A solution to this will of course be to take less mail in the bags, but conversely this means that the postman has to go back to the post office in order to fetch the remaining part of the mail that could not be carried in the first place. These conditions are further worsened in areas with very hilly terrain.

Another problem is that when the postman e.g. is distributing mail in a block of flats, the post bicycle with the mail in the bags will stand freely and unguarded and will thus be accessible to the public. This may be a cause to theft, vandalism or the like with associated drawbacks for both the postal service and for the recipient. In bad weather, including particularly rainy and windy weather, letters and packets are directly exposed to rain and wind, as well as a bicycle with post may tilt rather easily, whereby damage on letters and packets may also occur.

It is thus the purpose of the present invention to provide a vehicle relieving the above disadvantages by the existing distribution systems.

According to the invention, this is done by providing a vehicle constructed on a rigid base frame, and that between the rear wheels a shaft with integrated gearbox is arranged to which is coupled an electric motor connected to an electronic control via manipulation means arranged at the steering mechanism for regulating power transmission from a rechargeable energy source to the shaft, and that the seat arrangement is arranged separately from a closable integrated cargo compartment, preferably disposed behind the seat arrangement over the shaft and the electric motor.

By thus providing a vehicle with at least three wheels, a relatively stable construction is achieved which will not have the tendency of turning over due to hard wind. Furthermore, the closable, integrated cargo compartment ensures that the articles to be distributed, e.g. letters and packets, are stored in a safe way during the transport and distribution itself as well as it is made more difficult for possible third parties to get access to letters and packets. By furthermore placing the closable, integrated cargo compartment above and slightly in front of the rear axle, the stability of the vehicle is further increased.

By furthermore using an electric motor with associated transmission equipment, where the transmission of power from the energy source to the shaft, it is provided that vehicle is neither noisy nor polluting during driving or parking. In that way, the vehicle becomes comparable to the bicycle of the postman.

In a further, preferred embodiment, the rechargeable source of energy is provided in the form of batteries, fuel cells or other means for generating electric energy. Where batteries in the form of e.g. accumulators as known for cars, these may advantageously be disposed immediately over the base frame so that the point of gravity of the vehicle becomes as low as possible, whereby the total stability of the vehicle is provided for again.

In a further, preferred embodiment of the invention, the closable cargo compartment is provided with a remotely controlled locking device, which device is automatically activated when an electronic key is brought outside a certain predefined distance from the locking device. This embodiment is particularly interesting by e.g. distribution of post or the like, as the postman may have the electronic key in the pocket so that when the postman is close to the vehicle, there is free access to the cargo compartment so that the postman rapidly can take out letters, packets etc., but as soon as the postman leaves the vehicle, the cargo compartment is automatically locked whereby it is not possible for third persons to get access to the cargo compartment without using destructive means. This gives the vehicle a large safety factor with regard to unauthorised persons not getting access to objects in the cargo compartment.

The system may furthermore be extended to include an alarm. The alarm may be activated when the cargo compartment is not properly closed and/or when the electronic key is moved outside the predefined distance. Furthermore, the alarm may be activated if a third party tries to get unauthorised access to the cargo compartment.

In a further, preferred embodiment, the vehicle is designed so that the steering mechanism is connected via a stem to a front wheel suspension and is capable of turning one or more front wheels in the desired direction by means of suitable slide bushings, and that between the steering stem and the cargo compartment there is provided a platform being largely in parallel with the ground in the condition of use, and that the platform connects front wheel suspension and cargo compartment, and is simultaneously provided 50 mm to 300 mm, more preferred 75 to 200 mm and most preferred 100 to 150 mm above the ground, so that the base frame is surrounded by or integrated in the platform.

By providing a platform with relatively small distance to the ground, a low entry height is provided for, facilitating entry for the driver of the vehicle. This is particularly interesting when the driver of the vehicle, as it is e.g. the case when distributing post, is to go off and on the vehicle many times. The clearance between the ground and the underside of the vehicle is to be chosen so that conflict with obstacles in the terrain do not arise, i.e. if the vehicle is e.g. to drive over common curb stones, sewer covers, irregularly situated pavement slabs, or other obstacles that may be on the route of the vehicle. The platform may be designed as a lattice grate so that dirt is not collected, as well as rain, slush and other matter may pass through the platform, whereby is ensured an effective footing on the platform. Alternatively, the platform may be designed as a skid-proof corrosion-proof plate, e.g. a skid-proof aluminium plate.

In a further, preferred embodiment of the vehicle, the cargo compartment is designed with the closable cargo compartment having a width of at least 450 mm, a length of at least 600 and a height of at least 450 mm, and that the cargo compartment is closed by means of a pivoting lid, e.g. hinged immediately behind the seat arrangement, so that the lid in its open position is supported by the seat and/or there is provided one or more balanced gas springs holding the lid in any opening angle relative to the closed position of the lid.

Thus is provided a cargo compartment corresponding to the volume of two or three large, traditional post bags. By furthermore hinging the lid immediately behind the seat it is ensured that when the lid is opened for providing access to objects placed in the cargo compartment, the lid is supported on the seat so that it becomes possible for the user readily to close the cargo compartment again. In order to avoid that the lid shuts tight inadvertently, one or more balanced gas springs may be provided for holding the lid in an optional opening angle relative to the closing position of the lid. These gas damping springs are known per se for correspondingly holding the bonnet on a car in open position. The same advantages achieved by the bonnet on a car are similarly achieved at the opening and securing of the lid according to the invention.

In a still further, preferred embodiment of the invention, the base frame is made of a synthetic material, possibly a fibre reinforced synthetic material, or a metallic material as e.g. aluminium, stainless steel, steel or other suitable material.

As it is desirable to keep the weight a low as possible in order thereby to increase the load capability and/or the motor power and thereby the range of the vehicle, light materials may advantageously be used in the load-bearing structure, as e.g. fibre reinforced synthetic materials including carbon, graphite or other exotic synthetic materials. Also, aluminium is e.g. a preferred material as the force/weight ratio is very advantageous. For the fibre reinforced synthetic materials as well as for aluminium and stainless steel apply that these are not subjected to corrosion whereby the service life of the vehicle can be considerably extended or/and maintenance may be reduced. Where steel is used, this may advantageously be applied an anti-corrosion surface coating, e.g. epoxy varnishing.

Experiments with a prototype of the above vehicle have shown that the rechargeable energy source provides the vehicle with a range of minimum 15 km and, in a more preferred embodiment, up to 25 km. This is achieved with full load and including the vehicle driver. By suitable choice of gearbox and motor, the range can be made greater or lesser as well as the load capacity of the vehicle influences the range. Furthermore, the vehicle is designed to an operational speed between 15 and 20 km/h, but with suitable selection of gearbox and electric motor, the cruising speed can be reduced and increased, respectively.

In a further, preferred embodiment, the motor is coupled to a braking device which may either be activated by means of a handle in immediate vicinity of the steering mechanism or activated when the accelerator device is in closed position, or when the electronic key is moved a certain distance away from the vehicle. By this construction is avoided that a separate locking system with associated maintenance is to be provided. Furthermore, with such a system it is possible to actuate the brake in several different ways, whereby operation of the brake may be effected by the driver while driving and may also be effected as an automatic function when the driver, i.e. when the electronic key, is removed from the vehicle, causing it to be braked automatically.

In order to make the vehicle usable in urban environment, it is necessary to limit the physical size of the vehicle. In a preferred embodiment it is so that the greatest width of the vehicle is 700 mm, greatest length is 1650 mm, and that the dimension of the platform in longitudinal direction of the vehicle is 330 mm. Hereby it becomes possible to move on pavement. Moreover, parking the vehicle on the roadway will not present large problems as most streets and roads are so wide that two cars can pass each other around the vehicle.

The use of the vehicle is particularly developed with the intention of distribution of e.g. mail, groceries, fresh bread and the like. I.e. objects all having in common that they are to be distributed to several consumers within a limited radius so that stops will often occur.

The invention will now be explained with reference to the accompanying drawing, where:

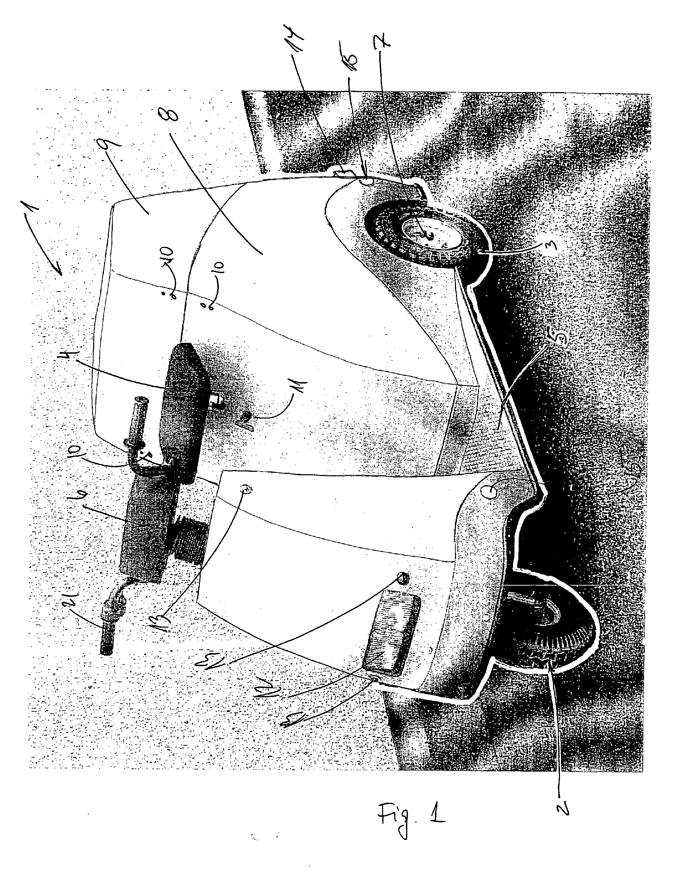

- Fig. 1: shows a view of the vehicle according to the invention, and
- Fig. 2: shows a horizontal section through the bottom frame.

In the example shown, the vehicle 1 is provided with three wheels of which two 2, 3 are seen. A seat arrangement 4 is provided with suitable spacing above the platform 5. The steering mechanism 6 in this example is shown as traditional handlebars known from bicycles, mopeds, scooters etc. The rear wheel 3 is mounted on a shaft of which the end 7 is seen at the centre of the wheel 3. Above and in front of the rear wheels 3 and thereby the shaft 7 is provided an integrated closable cargo compartment 8. Access to the cargo compartment is produced by pivoting up the lid 9. The lid 9 is hinged with internal hinges fastened immediately behind the seat 4 by means of the means 10.

Under the seat there is provided a switch 11 with a removable key whereby the electric circuits can be switched on so that the vehicle can be used.

Due to the traffic safety, a headlamp 12 and direction indicators 13 are provided at the front of the vehicle. Correspondingly, at the rear of the vehicle the usual rear lamps 14 are provided. In addition, reflectors 15 are arranged on the side of the vehicle.

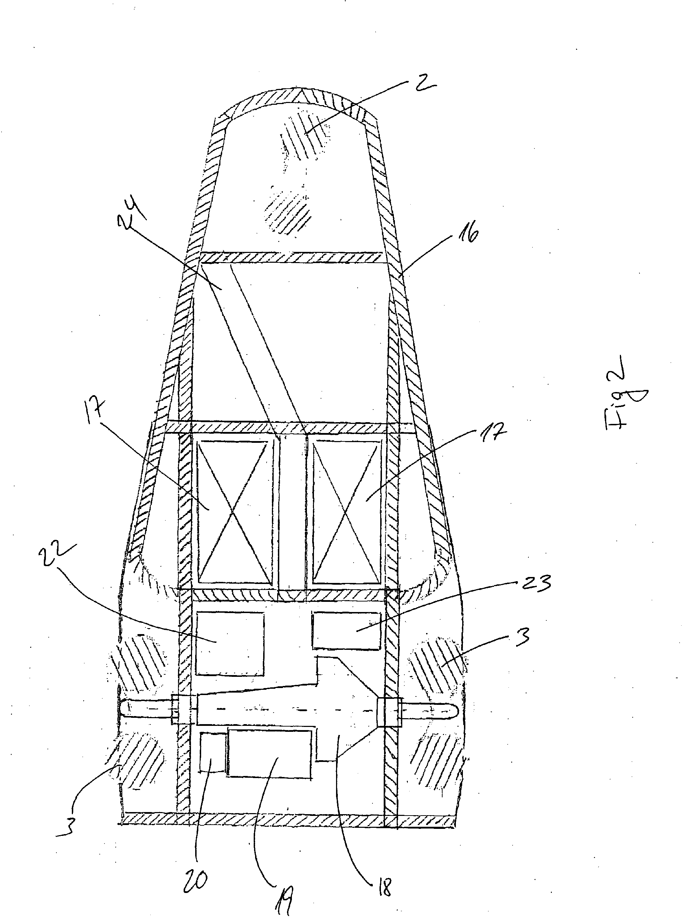

In Fig. 2 is schematically shown a horizontal section through the vehicle, illustrating the base frame 16. Where rechargeable batteries are used, such as accumulators known from cars, boats and motor cycles, these accumulators 17 are placed as low as possible in the construction for increasing the stability of the vehicle by lowering the point of gravity.

The shaft 18 with integrated gear is provided as suspended in the base frame, and the rear wheels 3 are fastened to the shaft with suitable means. The shaft is connected to an electric motor 19 so that power transmission from the batteries 17 to the electric motor is transferred directly to the shaft. A brake 20 is furthermore arranged on the electric motor. The brake may be activated at the steering mechanism by means of a handle provided in immediate vicinity of the steering mechanism 6. Alternatively, the brake may activated automatically when an electronic key is moved outside a certain distance from the vehicle whereby a system automatically locks the lid 9 on the cargo compartment 8 simultaneously with the brake being actuated. Besides, the brake may be actuated by bringing the accelerator device 21 provided at the steering mechanism 6 to closed position. In order to regulate the input from the steering mechanism 6, there is provided an electronic control box 22 and diverse electric control installations for direction indicators, starting etc. 23. In the base frame under the platform 5 there is furthermore provided a cable tray 24 in which the required wires are run from the energy source 17 to the steering mechanism 6, the headlamps 12, the direction indicators 13 and the other electric installations controlled from the steering mechanism.

The cargo compartment 8 is closed with the lid 9 and may furthermore be locked by means of an electronic locking device provided at the inner side of the lid and the cargo compartment wall, respectively. This locking device is activated by an electronic key being moved to a certain distance from the vehicle. This corresponds to the postman, who has taken out the wanted objects from the cargo compartment 8, is e.g. moving away from the vehicle 1 towards the place of delivery, e.g. a mailbox. At the post-postman's movement away from the vehicle 1, the locking mechanism is activated by means of an electronic key which the postman has e.g. in the pocket, whereby the cargo compartment is locked simultaneously with the brake is actuated. Thereby, access to the cargo compartment by a possible third person has been further encumbered as well as removal of the entire vehicle has be been made difficult. In addition to the electronic locking device there may furthermore be provided an alarm alarming the vehicle user that the lid has not been correctly closed with regard to the cargo compartment, whereby it is not possible to lock the lid relatively to the cargo compartment, or that unauthorised activity is taking place in connection with providing access to the cargo compartment 8. This alarm may be an alarm provided on the electronic key so that it is invisibly and inaudibly reported by third party to the user of the vehicle that unauthorised activity is occurring, or the alarm may be a siren corresponding to those in cars as well as the lights of the vehicle may be activated for flashing.

The base frame may advantageously be made of a corrosion-proof material, such as fibre reinforced resin or a tubular frame of e.g. aluminium. Hereby is achieved a very light but stable construction. The cover panels for covering lid, cargo compartment and steering mechanism may furthermore be made of different plastic materials, glass fibre reinforced polyester, aluminium plate or other suited materials.

The seating arrangement is provided on an adjustable, displaceable, largely vertical shaft, so that the seat height may be adapted to the preferred seat level of different users.

There is provided traditional suspension (not shown) in connection with front wheels as well as rear wheels.

## Claims

1. Vehicle with three or four wheels, steering mechanism and a seat arrangement, **characterised in that** the vehicle is built up on a rigid base frame, and that between the rear wheels a shaft with integrated gearbox is arranged to which is coupled an electric motor connected to an electronic control via manipulation means arranged at the steering mechanism for regulating power transmission from a rechargeable energy source to said shaft, and that the seat arrangement is arranged separately from a closable integrated cargo compartment, preferably disposed behind the seat arrangement over the shaft and the electric motor.

2. Vehicle according to claim 1, **characterised in that** the rechargeable source of energy is batteries, fuel cells, or other means for generating electric energy.

3. Vehicle according to claim 1 or 2, **characterised in that** the closable cargo compartment is provided with a remotely controlled locking device which is automatically activated when an electronic key is moved outside a certain pre-defined distance from the locking device.

4. Vehicle according to claim 1, **characterised in that** the steering mechanism is connected via a stem to a front wheel suspension and is capable of turning one or more front wheels in the desired direction by means of suitable slide bushings, and that between the steering stem and the cargo compartment there is provided a platform being largely in parallel with the ground in the condition of use, and that the platform connects front wheel suspension and cargo compartment, and is simultaneously provided 50 mm to 300 mm, more preferred 75 to 200 mm and most preferred 100 to 150 mm above the ground, so that the base frame is surrounded by or integrated in the platform.

5. Vehicle according to any preceding claim, **characterised in that** the closable cargo compartment has a width of at least 450 mm, a length of at least 600 and a height of at least 450 mm, and that the cargo compartment is closed by means of a pivoting lid, e.g. hinged immediately behind the seat arrangement, so that the lid in its open position is supported by the seat and/or there is provided one or more balanced gas springs holding the lid in any opening angle relative to the closed position of the lid.

6. Vehicle according to any preceding claim, **characterised in that** the base frame is made of a synthetic material, possibly a fibre reinforced synthetic material, or a metallic material as e.g. aluminium, stainless steel, steel or other suitable material.

7. Vehicle according to any preceding claim, **characterised in that** the rechargeable energy source provides the vehicle with a range of at least 15 km, more preferably 25 km.

8. Vehicle according to any preceding claim, **characterised in that** the motor is connected to a braking device which is either activated by means of a handle in immediate vicinity of the steering mechanism and/or is activated when the accelerator device is in closed position, and/or is activated when the electronic key is moved a certain distance away from the vehicle.

9. Vehicle according to any preceding claim, **characterised in that** the greatest width of the vehicle is 700 mm, greatest length is 1650 mm, and that the dimension of the platform in longitudinal direction of the vehicle is 330 mm.

10. Use of a vehicle according to one or more of claims 1 to 9, **characterised in that** the vehicle is used for distributing e.g. mail, groceries, fresh bread and the like.
